# EUROPEAN PATENT SPECIFICATION

(11) **EP 2 803 168 B1**
(45) Date of publication and mention of the grant of the patent: **21.10.2015**
(21) Application number: 12711573.1
(22) Date of filing: 27.03.2012
(51) Int. Cl.: H04L 12/24

(54) **NETWORK DEVICE CONTROL IN A SOFTWARE DEFINED NETWORK**
NETZWERKVORRICHTUNGSSTEUERUNG IN EINEM SOFTWAREDEFINIERTEN NETZWERK
CONTRÔLE DE DISPOSITIF DE RÉSEAU DANS UN SDN

(30) Priority: 09.01.2012 US 201261584379 P
(43) Date of publication of application: 19.11.2014
(73) Proprietor: Telefonaktiebolaget LM Ericsson (PUBL), 164 83 Stockholm (SE)
(72) Inventor: KIS, Zoltán Lajos, H-1033 Budapest (HU)
(74) Representative: Röthinger, Rainer
(86) International application number: PCT/EP2012/001333
(87) International publication number: WO 2013/104375

(56) References cited:
- EP-A1- 2 139 161
- US-A1- 2011 317 559
- Zoltán Lajos Kis et al: "OpenFlow 1.2", The Open Networking Foundation , 5 December 2011 (2011-12-05), XP002677841, Retrieved from the Internet: URL:https://www.opennetworking.org/images/ stories/downloads/specification/openflow-s pec-v1.2.pdf [retrieved on 2012-06-14]
- WANG TSINGHUA UNIVERSITY T TSOU J HUANG HUAWEI X SHI X YIN TSINGHUA UNIVERSITY Z: "Analysis of Comparisons between OpenFlow and ForCES; draft-wang-forces-compare-openflow-forces- 00.txt", ANALYSIS OF COMPARISONS BETWEEN OPENFLOW AND FORCES; DRAFT-WANG-FORCES-COMPARE-OPENFLOW-FORCES- 00.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, 2 December 2011 (2011-12-02), pages 1-12, XP015079616, [retrieved on 2011-12-02]

## Description

### Technical Field

The present disclosure generally relates to a software defined network, and more particularly relates to the use of templates in a software defined network.

### Background

The physical architecture of a communications network includes a plurality of network devices, such as routers, switches, Network Address Translation (NAT) boxes, firewalls, load balancers, and the like. By contrast, the logical architecture of such a network is divided into a data plane and a control plane. The data plane is responsible for transmitting user data packets across the network devices based on a predefined set of rules. The control plane is responsible for setting those rules on the different network devices.

In traditional networking, both data plane and control plane processes run on each network device. The different control plane processes on the different network devices make control plane decisions by communicating with each other using dedicated communication protocols such as the so-called spanning-tree protocol and different routing protocols. This communication is usually done in-band (i.e., the control plane and data plane traffic is sent over the same medium), but the communication is also possible out-of-band (i.e., a separate network is maintained for control plane traffic).

While a peer-to-peer setup of the control plane as described above provides resiliency and scalability, its disadvantage is that decisions must be made using distributed algorithms, and that consistent network view across the network devices cannot be guaranteed (e.g., due to the relatively slow spreading of information).

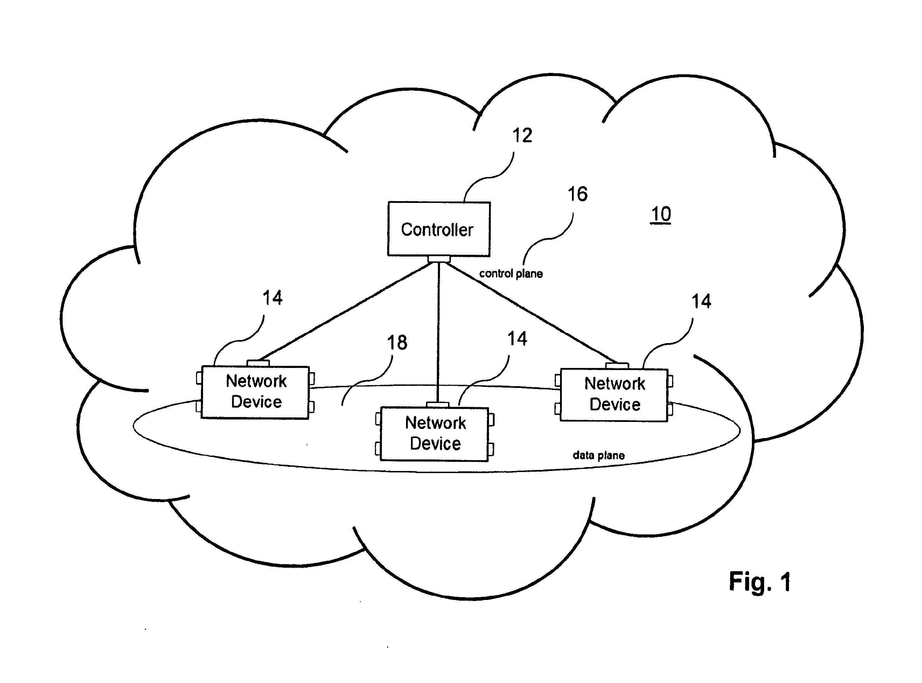

So-called Software Defined Networks (SDN) move the control plane processes from the network devices to a logically centralized controller, so that only the data plane processing remains on the network devices. Fig. 1 illustrates an exemplary SDN 10 comprising a logically centralized controller 12, multiple network devices 14 (or simply "devices"), a control plane 16 and a data plane 18.

In the SDN scenario of Fig. 1, the centralized controller 12 remotely queries the different network devices 14 in order to acquire a global view of the whole network state and intelligently makes rule decisions based on that global view. In this regard, the controller 12 and the network devices 14 use a communications protocol, such as OpenFlow or ForCES, so that the controller 12 can program and query the network devices 14 (see, e.g., protocol specification for version 1.1 of OpenFlow and the ForCES Forwarding Element Model described in RFC 5812).

Regardless of its particular implementation, the communications protocol defines and/or negotiates an abstract device architecture (also referred to as an abstract device) between an individual network device 14 and the controller 12. The controller 12 then sends commands to this abstract device. A Hardware Abstraction Layer (HAL) on each network device 14 translates abstract rules included in such commands to the actual hardware of the network device 14. For example, when the controller 12 asks a particular network device 14 to forward all packets with a 10.10.0.0/16 destination IPv4 address (i.e., all IPv4 addresses beginning with 10.10), the HAL can autonomously decide whether to use a Content Addressable Memory (CAM), a Ternary CAM (TCAM), or simple logic arrays for executing the command.

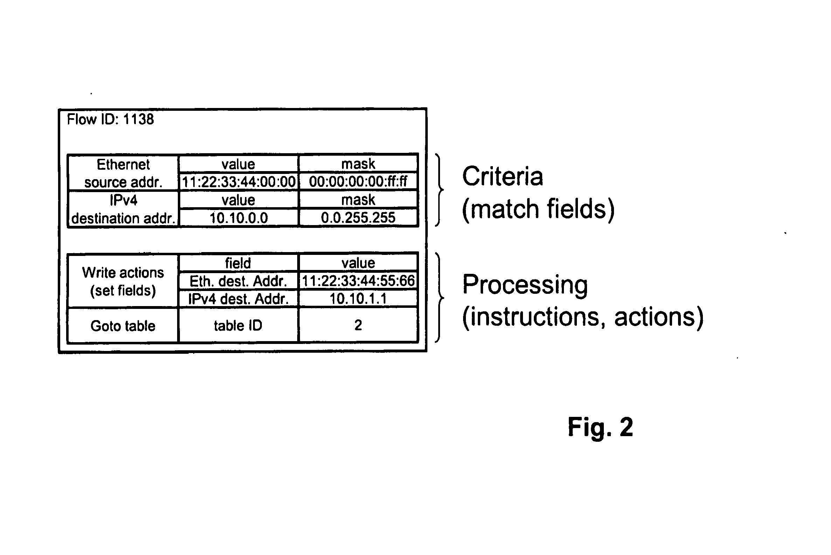

In the following, an SDN command scenario will exemplarily be described in which the communications protocol comprises OpenFlow detail. The abstract network device architecture in OpenFlow 1.x comprises a set of flow tables. Each flow entry (or, in short, each flow) in a flow table defines certain processing to be performed with respect to data packets that meet certain criteria. As shown for an exemplary flow entry in Fig. 2, the processing is described as a set of so called instructions or actions, while the criteria are described as a set of so-called match fields.

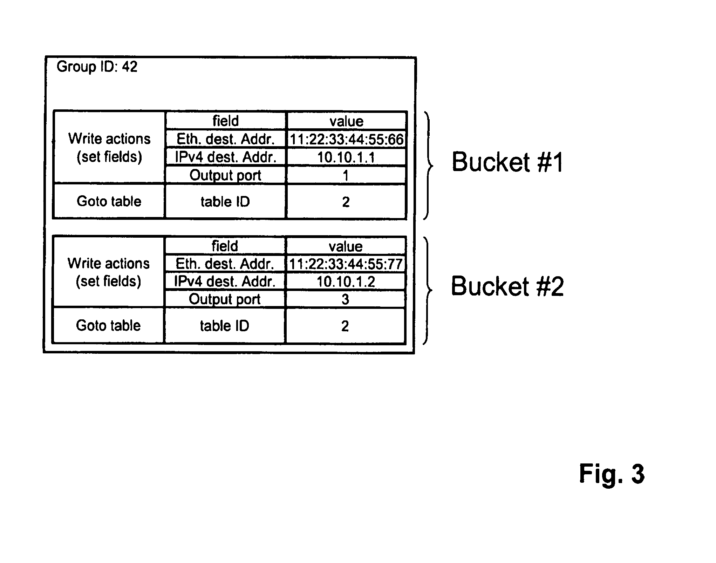

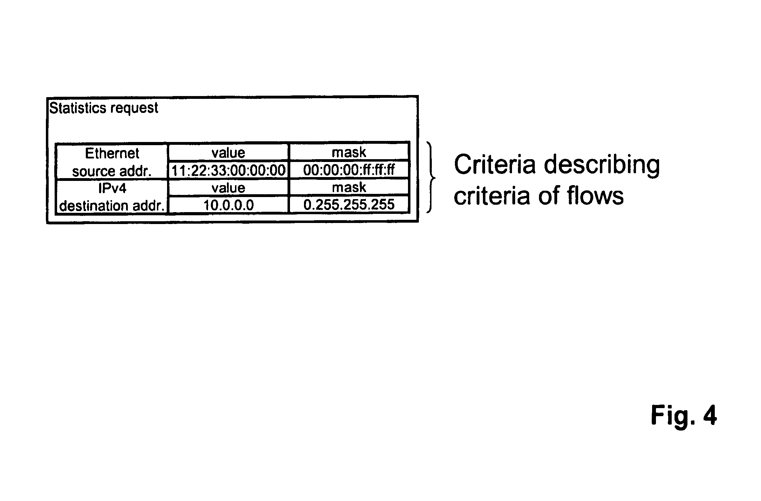

Further, as shown in Fig. 3, abstract devices in OpenFlow 1.1 also may have a group table containing group entries which define bucket-based selection/multiplication processing of the data packets. OpenFlow 1.x also enables the controller 12 to query a network device 14 for statistics on flows (e.g., based on data packet counters and byte counters), where the flows are discriminated by similar match fields as used in flows. Fig. 4 illustrates the format of an exemplary statistics request message.

In known approaches, when the controller 12 exemplarily operating according to OpenFlow installs a new flow onto one of the network devices 14 (which ultimately entails inserting the flow into a flow table), the network device 14 will execute the following steps. First the device 14 determines if it is capable of checking the packet criteria defined for the flow, and performing the packet processing defined for the flow. Then the device 14 decides how to map the given command (e.g., the flow being installed) to its actual hardware (e.g., which hardware elements to use). Finally, the device 14 executes the command (e.g., inserts the flow into the flow table), and updates the necessary counters (e.g., any counters that the newly inserted flow affects).

The fact that the controller 12 in these known approaches controls the device 14 on a flow basis may prove problematic in some circumstances. Indeed, the above steps are executed after each and every flow insertion, a process which taxes the resources of the device 14.

Moreover, different flow entries can be mapped to hardware resources of the device 14 differently. For example, one flow might require a single TCAM entry, while another flow might require two TCAM entries and a certain amount of Static Random Access Memory (SRAM) space. The device 14 can only inform the controller 12 about the hardware resources available for flow entries in terms of flows. If the device 14 were programmed to be conservative, it might report available space by taking the most resource-consuming flow types into account. However, usually controllers 12 insert simple flows, so this would result in under-provisioning of the available hardware resources. Therefore, currently devices 14 give a best-effort estimate on the available flow space. Upon inserting a flow, the flow is mapped to the actual hardware "on the fly", and the flow space availability is re-calculated (but the change is not pushed to the controller 12).

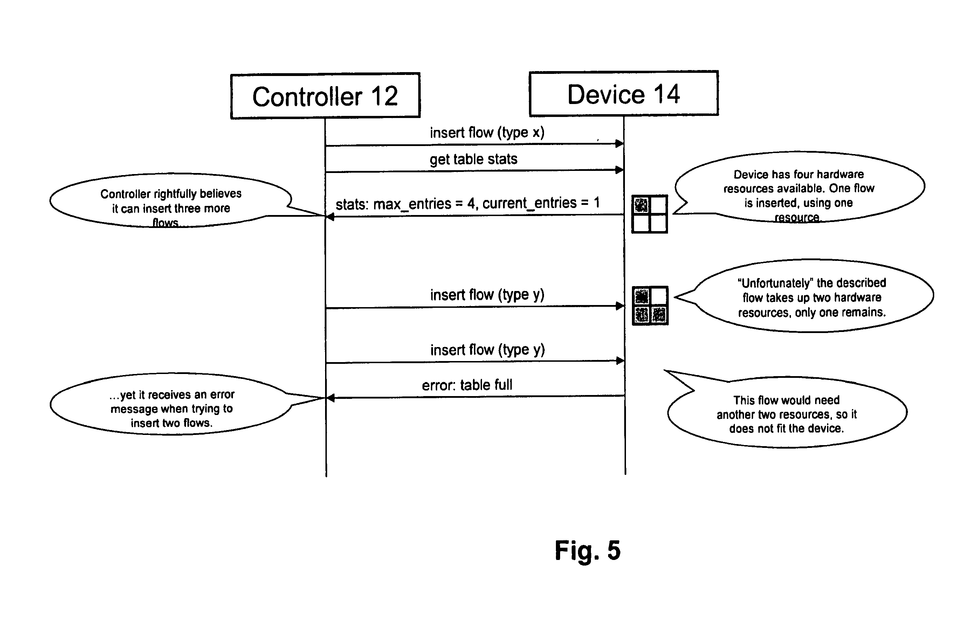

As a result, it is difficult for the controller 12 to predict how many of the abstract flow entries fit a specific device 14. This means that, depending on the kind of flows that the controller 12 adds to the device 14, the amount of resources on the device 14 might be depleted faster than expected by the controller 12. For example, as shown in Fig. 5, when the controller 12, after an "insert flow" command (step 1), requests the number of free spaces available in a flow table (step 2), the device 14 reports a best effort number of available free spaces (step 3). Upon receiving an indication that there is available free space, the controller 12 may send a message to add further flows to the device 14 (steps 4 and 5). But, even though free space was reported, the device 14 may still, in step 6, drop the flow (instead of adding it) if the kind of flow (here: type y) the controller 12 added actually requires more free space than reported (here: for type x).

A further problem is that communications protocols in SDNs allow querying of statistics (e.g., based on counters) on an ad-hoc manner. For example, the controller 12 can request the number of data packets forwarded based on flows that match data packets with IPv4 source addresses of 10.0.0.0/8 (where the actual flows inserted to the device might in fact match on 10.1.0.0/16 and 10.2.0.0/16 addresses). As a consequence, the device 14 must aggregate the counters "on the fly" after the request arrives, a process which delays query response time.

Moreover, even though similar flows are being used in most use-cases, the complete flow description needs to be communicated between the controller 12 and the device 14, which may cause unnecessary overhead on the control channel.

Document EP 2 139 161 A1 may be construed to disclose a network equipment configuration method, network equipment, and a network system. The method includes the following steps. The network equipment receives configuration information. The configuration information comprises an identifier of a configuration template to be called and configuration parameters. The network equipment calls a configuration template that is locally pre-stored and identified by the configuration template identifier and puts the configuration parameters into the configuration template, so that the network equipment is configured. The configuration template is based on an extensible markup language (XML).

Document "OpenFlow 1.2", Zoltán et.al., The Open Networking Foundation, may be construed to disclose requirements of an OpenFlow Switch. An OpenFlow Switch consists of one or more flow tables and a group table, which perform packet lookups and forwarding, and an OpenFlow channel to an external controller. The switch communicates with the controller and the controller manages the switch via the OpenFlow protocol. Using the OpenFlow protocol, the controller can add, update, and delete flow entries in flow tables, both reactively (in response to packets) and proactively. Each flow table in the switch contains a set of flow entries; each flow entry consists of match fields, counters, and a set of instructions to apply to matching packets.

Document US 2011/317559 A1 may be construed to disclose a method performed by a network element, for notifying a controller of a change to a packet forwarding configuration of the network element. The network element is separated from the controller by a communication channel. The method includes determining the change to the packet forwarding configuration of the network element. The packet forwarding configuration specifies how packets are to be forwarded by the network element. The method also includes actively notifying the controller of the change to the packet forwarding configuration by sending a message to the controller over the communication channel. The message, in addition to indicating the change, also indicates at least one detail about the packet forwarding configuration after the change.

### Summary

Accordingly, there is a need for a SDN, SDN components and respective operational modes that overcome one or more of the problems discussed above.

According to the invention, there are provided methods and apparatuses according to the independent claims. Developments are set forth in the dependent claims.

According to a first aspect, a method implemented by a controller in an SDN for programming or querying a network device via a communications protocol is provided. The method comprises creating at least one template for a type of message defined by the communications protocol, wherein the template predefines at least one value for at least one parameter conveyed by that type of message. The method further comprises sending the at least one template to the network device for installation by that network device.

An (empty) template may abstractly predefine at least one parameter conveyed by a particular message as a template parameter. During usage of the template, a value may be assigned to each template parameter prior to sending the filled-in template with the value(s) for the template parameter(s) to the network device.

According to another aspect, a method implemented by a controller in an SDN for programming or querying a network device via communications protocol is provided, wherein at the network device at least one template for a type of message defined by the communications protocol is installed and wherein the template predefines at least one value for at least one parameter conveyed by that type of message. The method comprises generating a message of the type for which the at least one template is installed at the network device, wherein the message refers to the template and specifies a value for at least one parameter whose value has not already been specified by that template. The method may further comprise sending the generated message to the network device.

The generating step may be performed responsive to various situations. As an example, the generating step may be responsive to determining that a message of that type is to be sent to the network device and that one or more parameter values to be conveyed by such a message match or otherwise correspond to a template created for that message type (for which a template has already been installed at the network device).

According to a further aspect, a method implemented by a network device in an SDN is provided, wherein the network device is configured to be remotely programmed or queried by a controller via a communications protocol. The method comprises receiving at least one template for a type of message defined by the communications protocol, wherein the template predefines at least one value for a least one parameter conveyed by that type of message. The method further comprises installing the at least one template.

The installing step may be performed in various ways and may include various actions. As an example, installing the at least one template may include storing the at least one template. Additionally, or as an alternative, installing the at least one template may include interpreting or otherwise inspecting the at least one parameter value. As a further alternative, or additionally, installing the at least one template may include checking the extent to which the network device is capable of receiving and/or processing messages that refer to the template. Additionally, or as a still further alternative, installing the at least one template may include planning for hardware mapping based on the at least one template.

In a further implementation, installing the at least one template may additionally or alternatively comprise checking the extent to which the network device is capable of performing certain actions. Such actions may comprise determining whether incoming data packets meet certain criteria specified in the at least one template and/or performing certain processing specified in the at least one template.

In one example, the type of message may be an add flow message directed at installing a new data packet flow onto the network device. In such a scenario the checking step may be performed once for the at least one template. In other words, at least some flow-specific checking steps may be eliminated upon receipt of an add flow message referring to that template (compared to a scenario in which no template is used).

When the type of message is an add flow message directed at installing a new data packet flow onto the network device, the step of installing the at least one template may comprise one or more planning actions. As an example, it may be planned to which hardware resources of the network device flows added based on the template will be mapped.

In the at least one template, one or more values for one or more masking parameters regarding masking of packet addresses may be predefined. In such a case the planning step may be based on that one or more predefined values.

When the type of message is an add flow message directed at installing a new data packet flow onto the network device, the at least one template may comprise information that describes the extent to which flows are expected to be added from that template. The planning step may then be based on that information.

Moreover, when the type of message is an add flow message directed at installing a new data packet flow onto the network device, a report may be sent to the controller. The report may contain one or more items of information, such as an indication of how many flows can be added based on the template.

In one implementation, the type of message may be a statistics request message that queries the network device for statics. As an example, the statics may pertain to one or more data packet flows installed onto the network device. In such a case installing the at least one template may comprise creating one or more counters (e.g., data packet counters or byte counters) for the expected requests.

In another aspect, a method implemented by a network device in a SDN is provided, wherein the network device is configured to be remotely programmed or queried by a controller via communications protocol, wherein at the network device at least one template for a type of message defined by the communications protocol is installed and wherein the template predefines at least one value for at least one parameter conveyed by that type of message. The method comprising receiving a message of the type for which the at least one template is installed at the network device, wherein the message refers to the template and specifies a value for at least one parameter whose value has not already been specified by that template. The method further comprises processing the message in accordance with at least one parameter value specified in the received message itself and at least one parameter value predefined in the template to which the message refers.

In one scenario the at least one template may have an identifier that identifies the template. In such a scenario, the message may refer to the template by specifying its identifier.

For a given type of message multiple templates may be provided, wherein each template predefines values for a selected subset of parameters. Here, different templates may predefine different values for the same selected subset of parameters and/or different selected subsets of parameters.

The type of message may be a state programming message or a state querying message with respect to a state of the network device. The state programming message may instantiate, delete or modify a rule to the network device that governs or otherwise defines processing in a data plane with respect to received data packets that meet certain criteria. The rule may pertain to a data packet flow entry in a flow table and/or a data packet flow group in a flow table. The state querying message may be directed at collecting statistics pertaining to processing of data packets by the network device.

The at least one template may bear the same format as a regular message and/or a data packet flow description specified in the communications protocol. As an example, the at least one template in the data packet flow description format may comprise description fields and an annotation in order to appoint the descriptions fields as being either predefined values or template variables to be filled in later. The communications protocol may be one of the OpenFlow protocol and the ForCES Forwarding Element Model protocol as defined in RFC 5812.

Also provided is a computer program product comprising program code portions for performing the steps of any of the methods and method aspects presented herein when the computer program product is executed one or more computing devices. The computer program product may be stored on a computer-readable recording medium such as a CD-ROM, DVD or semiconductor memory. Alternatively, the computer program product may be provided for download via a communication network, such as the Internet.

Further provided is a controller for an SDN, wherein the controller is configured to program or query a network device via a communications protocol. The controller comprises a template creator configured to create at least one template for a type of message defined by the communications protocol, wherein the template predefines at least one value for at least one parameter conveyed by that type of message. The controller further comprises an interface configured to send the at least one template to the network device for installation by that network device.

According to a further aspect, a controller for an SDN is provided, wherein the controller may be configured to program or query a network device via a communications protocol, wherein at the network device at least one template for a type of message defined by the communications protocol may be installed, and wherein the template may predefine at least one value for at least one parameter conveyed by that type of message. The controller may comprise a message generator configured to generate a message of the type for which the at least one template is installed at the network device, wherein a message may refer to the template and may specify a value for at least one parameter whose value has not already been specified by that template. The controller may further comprise an interface configured to send the generated messages to the network device.

Further provided is a network device of an SDN, wherein the network device is configured to be remotely programmed or queried by a controller via a communications protocol. The network device comprises an interface configured to receive at least one template for a type of message defined by the communications protocol, wherein the template predefines at least one value for at least one parameter conveyed by that type of message. The network device further comprises a template installer configured to install the at least one template.

Moreover, a network device for an SDN is provided, wherein the network device may be configured to be remotely programmed or queried by a controller via a communications protocol, wherein at the network device at least one template for a type of message defined by the communications protocol may be installed and wherein the template may predefine at least one value for at least one parameter conveyed by that type of message. The network device may comprise an interface configured to receive a message of the type for which the at least one template is installed at the network device, wherein the message may refer to the template and may specify a value for at least one parameter whose value has not already been specified by that template. The network device may further comprise a message processor configured to process the message in accordance with at least one parameter value specified in the received message itself and at least one parameter value predefined in the template to which the message refers.

### Brief Description of the Drawings

Further details, aspects and advantages of the present disclosure become apparent from the following description of exemplary embodiments in conjunction with the drawings, wherein:
- Fig. 1: schematically illustrates an SDN in which the present disclosure can be practiced;
- Fig. 2: schematically illustrates a flow entry in a flow table;
- Fig. 3: schematically illustrates a group entry in a flow table;
- Fig. 4: schematically shows the content of a statistics request message;
- Fig. 5: is a schematic diagram illustrating the signaling between a controller and a network device upon querying of flow table size statistics;
- Fig. 6: schematically illustrates components of a controller embodiment;
- Fig. 7: schematically illustrates components of a network device embodiment;
- Fig. 8: shows a flow diagram illustrating a method embodiment of controller operation;
- Fig. 9: shows a flow diagram illustrating a method embodiment of network device operation;
- Fig. 10: schematically illustrates the binding between a flow template and a flow entry;
- Fig. 11: schematically illustrates an example of the flow template with hints on usage;
- Fig. 12: is a schematic diagram illustrating the signaling between a controller and a network device in a hardware resource planning embodiment;
- Fig. 13: schematically illustrates a statics request template and its usage;
- Fig. 14: schematically illustrates the use of bits in the field class/type for marking template parameters, or template variables;
- Fig. 15: schematically illustrates the use of a separate bit field for denoting template parameters, or template variables;
- Fig. 16: schematically illustrates the insertion of multiple flows using bulk entries; and
- Fig. 17: illustrates the use of a bulk statistics request message for a statics aggregation.

### Detailed Description

In the following description of exemplary embodiments, for purposes of explanation and not limitation, specific details are set forth, such as specific controller and network device configurations, to provide a thorough understanding of the present disclosure. It will be apparent to one skilled in the art that the technique presented herein may be practiced in other embodiments that depart from these specific details.

Moreover, those skilled in the art will further appreciate that the methods, steps and functions discussed herein may be implemented using individual hardware circuitry, using software functioning in conjunction with a programmed microprocessor or a general purpose computer, using one or more Application Specific Integrated Circuits (ASICs), one or more Digital Signal Processors (DSPs) and/or one or more Field Programmable Gate Arrays (FPGAs). It will also be appreciated that the methods, steps and functions disclosed herein may be embodied in a processor and a memory coupled to the processor, wherein the memory stores one or more programs that perform the steps discussed herein when executed by the processor.

One or more embodiments herein include a controller 12 and one or more network devices 14 in an SDN 10 as generally illustrated in Fig. 1. In the SDN 10 the control plane 16 is decoupled from the physical network topology. As such, the control plane 16 can be realized using a different distribution model (e.g., in terms of network entities) than the data plane 16. Moreover, the SDN 10 allows the control plane development and runtime environment to be on a different hardware platform (as indicated by controller 12 in Fig. 1) than the (traditionally low-powered) management processors on the network devices 14 (e.g., routers, switches, Network Address Translation (NAT) boxes, firewalls, load balancers, and the like).

As will become apparent from the following exemplary embodiments, the controller 12 and network devices 14 advantageously employ one or more so-called templates to communicate on the control plane 16. A template may take the form of a predefined data structure. The data structure may initially be empty but define one or more template parameters (or "variables" for which one or more values may be filled-in prior to transmission of the template. Specifically, a template is provided for a type of message that may be communicated between the controller 12 and one or more of the network devices 14 and may predefine values for a selected subset of one or more (template) parameters conveyed by that type of message.

The controller 12 may therefore generate messages of that type to simply reference a template installed or otherwise stored at one or more of the network devices 14, without having to redundantly specify values for those parameters whose values have already been predefined by the template. Moreover, installation of a template at one or the network devices 14 effectively provides the network device 14 with advanced notice of parameter values common to multiple messages of a given type that will or are likely to be received from the controller 12.

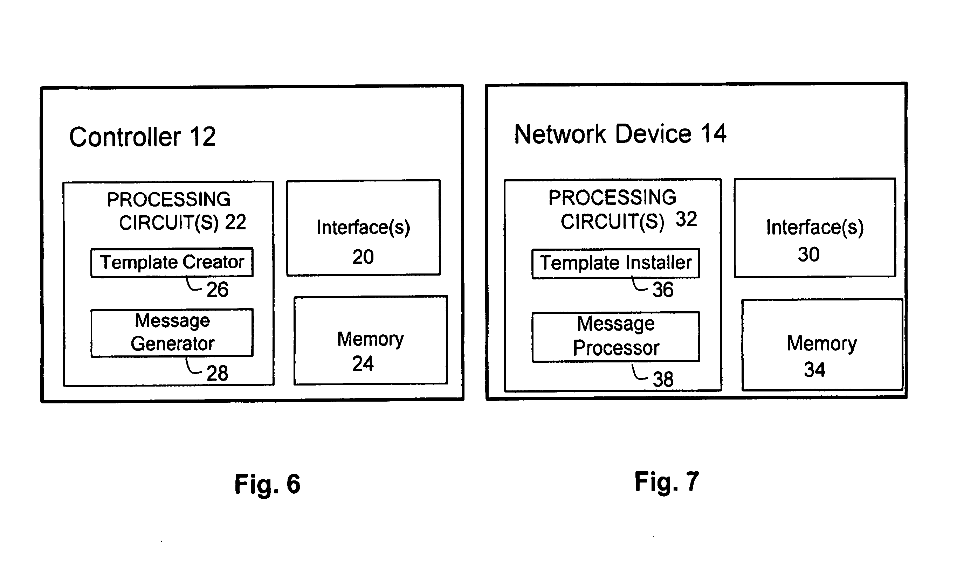

The controller 12 and network devices 14 may thus exploit templates to not only reduce message overhead, but also to increase the efficiency with which an individual network device 14 processes messages, to improve the accuracy with which the device 14 provides hardware resource reports to the controller 12, and to reduce delays in the time taken by the device 14 to respond to controller queries. These and other aspects will now be discussed in more detail with reference to Figs. 6 to 17.

Fig. 6 depicts an embodiment of an exemplary controller 12 operative to function as described herein. As shown in Fig. 6, the controller 12 includes one or more interfaces 20, one or more processing circuits 22 on one or more memories 24. The one or more interfaces 20 are configured to at least communicate with one or more network devices 14 in the SDN 10 of Fig. 1 according to a predefined communications protocol.

The one or more processing circuits 22 may functionally include a template creator 26 and a message generator 28. The template creator 26 is configured to create one or more templates for a type of message defined by the communications protocol. Responsive to such creation, the one or more interfaces 20 are configured to send the one or more created templates to a network device 14, e.g., via the communications protocol. The message generator 28 is configured to generate a message of that type to refer to one of the templates and to specify a value for each of one or more parameters whose value has not already been predefined by that template. The one or more interfaces 20 are configured to send this message to the network device 14.

Correspondingly, Fig. 7 depicts an embodiment of an exemplary network device 14 operative to function as described herein. As shown in Fig. 7, the network device 14 also includes one or more interfaces 30, one or more processing circuits 32, and one or more memories 34. The one or more interfaces 28 are configured to at least communicate with the controller 12 according to a communications protocol.

The one or more processing circuits 30 may functionally include a template installer 36 and a message processor 38. The template installer 36 is configured to install one or more templates received by the device 14 via the one or more interfaces 28. Such installation may ultimately entail storing a template in memory 34. The message processor 38 is configured to process a message received via the one or more interfaces 30 that refers to one of the templates and that specifies a value for each message parameter whose value has not been predefined by that template. In particular, the message processor 38 is configured to process the message in accordance with values specified in the message itself and values predefined in the template to which the message refers.

Those skilled in the art will appreciate that Figs. 6 and 7 are schematic, and that the entities depicted therein may further include interfaces configured to communicate with respective ones of the other entities. Further, the depicted circuits may be realized, implemented, or otherwise configured within the entities, based upon the execution of computer program instructions stored in memory or within another computer readable medium in the entity.

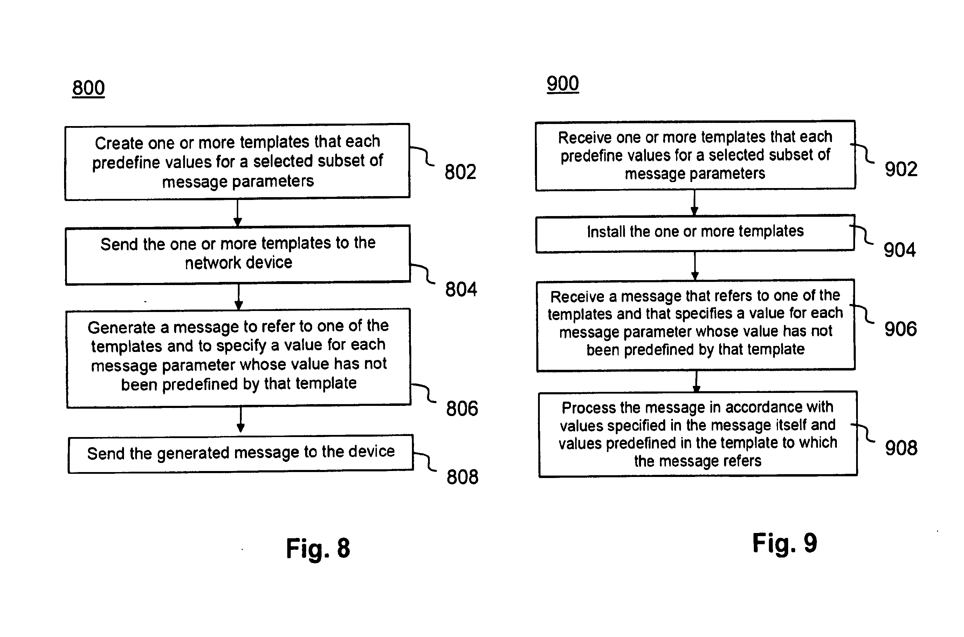

In more detail, at least one embodiment herein includes a method implemented by the controller 12 of Fig. 6 for remotely programming or querying one or more of the network devices 14 in the SDN 10 via a communications protocol. Fig. 8 shows a flow diagram 800 that illustrates an embodiment of such a method.

As shown in Fig. 8, the method entails a step 802 of creating one or more templates for a type of message defined by the communications protocol. Each such template predefines values for a selected subset of parameters conveyed by that type of message. Different templates may predefine different values for the same selected subset of parameters, or different templates may even predefine different values for different selected subsets of parameters. This and other aspects of the template creation process may depend on input received from a user interface of the controller 12, on instructions retrieved from memory of the controller 12, or some combination thereof.

Regardless, the method includes sending the one or more created templates to the network device 14, for installation by the device 14 (step 804). The method next entails generating, in step 806, a message of that type to refer to one of the templates and to specify a value for each of one or more parameters whose value has not already been predefined by that template (and to optionally refrain from specifying a value for any parameter whose value has already been predefined by the template). This generation may of course be responsive to determining that a message of said type is to be sent to the device 14 and that parameter values to be conveyed by such a message match or otherwise correspond to one of the templates created for said type. The template matching process may simply comprise comparing the values of the parameters to be conveyed by the message to the values predefined by the created templates for corresponding parameters, and identifying based on that comparison which, if any, template predefines the same values for each of the parameters to be conveyed. Then, the method includes sending the generated message to the device 14 in step 808.

Correspondingly, at least one embodiment herein includes a method implemented by one of the network devices 14 (see Fig. 7) in the SDN 10. The network device 14 is configured to be remotely programmed or queried by the controller 12 via a communications protocol. Fig. 7 shows a flow diagram 700 that illustrates an embodiment of such a method.

As shown in Fig. 7, the method includes receiving from the controller 12 one or more templates for a type of message defined by the communications protocol in step 902, and installing those one or more templates in step 904. Installation of a template in this regard depends on the type of message for which the template has been created, but in general may entail interpreting or otherwise inspecting the parameter values predefined by the template, performing checks regarding the extent to which the network device 14 is capable of receiving and processing messages that refer to the template, planning for hardware mapping based on the template, or the like.

Regardless, the method further includes receiving from the controller 12, in step 906, a message of said type that refers to one of the installed templates and that specifies a value for each of one or more parameters whose value has not already been predefined by that template. Responsive to receipt of such a message, the method entails, in step 908, processing the message in accordance with values specified in the message itself (i.e., message-specific values) and values predefined in the template to which the message refers (i.e., template-specific values).

Although the messages mentioned above may include any of the messages defined by the communications protocol between the controller 12 and the network device 14 in the SDN 10, the messages in at least some embodiments are sent from the controller 12 to the device 14 in order to directly manage (e.g., program) or inspect the state of (e.g., query) the device 14. The function of a message in this regard may distinguish its type from that of another message, at least in part. In general, therefore, one type of message may manage the state of the device 14, while another type of message may simply inspect the state of the device 14 (e.g., collect statistics pertaining to the device state). Thus, one set of templates may be created for a state management message, while another set of templates may be created for a state inspection message.

Of course, templates may be created for different message types on an even finer granularity than that described above. For example, different state management messages as generally described above may themselves manage the state of the device 14 in different ways. One state management message, for instance, may instantiate (i.e., add) a rule to the device 14 that governs or otherwise defines certain processing to be performed (in the data plane) with respect to received data packets that meet certain criteria. Other state management messages may delete or modify such a rule already added to the device 14. In view of these functional differences and the associated differences in the parameters conveyed, different sets of templates may be created for these different types of state management messages.

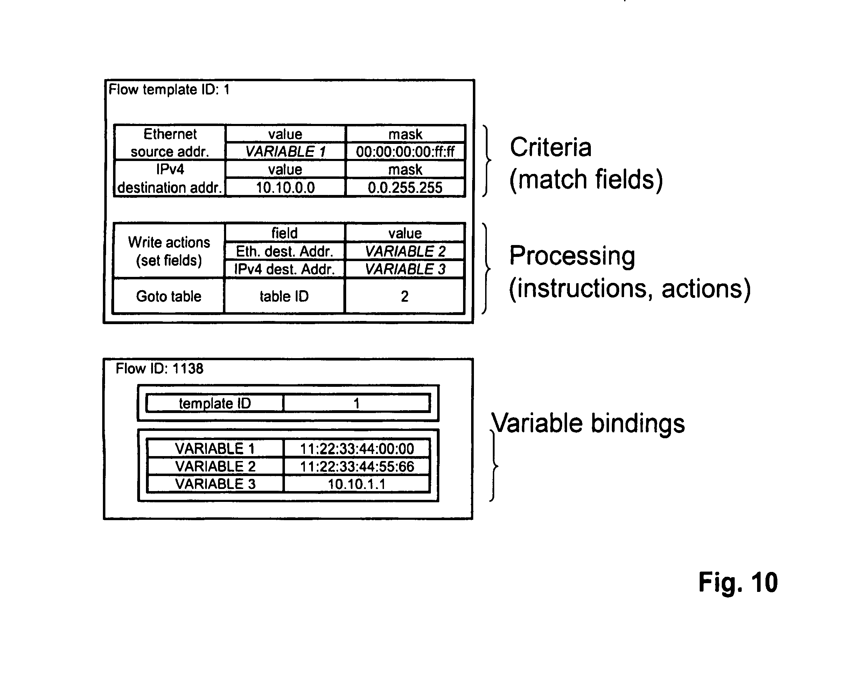

Consider, for instance, embodiments where rules are added exemplarily on the device 14 as flow entries (or simply flows) in a flow table or as groups in a group table. In one particular example of such embodiments, the communications protocol comprises the OpenFlow protocol. Regardless, the controller creates and sends to the device 14 a set of one or more templates for a type of message that adds flows to the device 14 (i.e., an add flow message), a set of one or more templates for a type of message that adds groups to the device 14 (i.e., an add group message), or both. Then, in order to add a flow to the device 14, for example, the controller 12 may generate an add flow message that refers to one of the templates created for add flow messages and that specifies values for any parameters whose value has not already been predefined by that template. Fig. 10 provides a simple example.

As shown in the upper half of Fig. 10, a template created for an add flow message predefines (fixed) values for at least some of the parameters (e.g., fields) conveyed by an add flow message, but refrains from predefining values for other parameters (e.g., some fields are left empty or otherwise variable). The controller 12 may therefore later generate an add flow message (as shown in the lower half of Fig. 10) that refers to such a template (e.g., by specifying an identifier of that template - here, the identifier = 1) and that specifies values for any parameters whose value has not already been predefined by that template (here, the add flow message binds values to variables 1, 2, and 3 defined in the template).

The receipt of such a template for an add flow message effectively provides a network device 14 with advanced notice of parameter values common to multiple add flow messages that will or are likely to be received from the controller 12. Thus, when installing a template, the device 14 may perform processing that exploits this advanced notice in order to increase the efficiency with which the device 14 adds flows, to improve the accuracy with which the device 14 provides hardware resource reports to the controller 12, and to reduce delays in the time taken by the device 14 to respond to controller queries.

More particularly, the device 14 in some embodiments installs a template for an add flow message by checking the extent to which the device 14 is capable of adding the types of flows that the template embodies; that is, the extent to which the device 14 is capable of determining whether incoming data packets meet certain criteria specified in the template and to which the device 14 is capable of performing certain processing specified in the template. The device 14 performs this check once for the template, rather than redundantly performing the check each time a flow is added based on the template. The only checks in this regard that the device 14 actually performs when a flow is added based on the template relate to the message-specific parameter values that were specified by the associated add flow message and that were not already predefined by the template. Broadly, therefore, the template effectively notifies the device in advance that multiple flows of the same type may be added and that such checking can be performed only once (thereby eliminating at least some redundant, flow-specific checking steps).

Template installation at the device 14 in other embodiments alternatively or additionally includes performing advanced planning regarding to which hardware resources flows added based on the template will be mapped. Such planning may be performed at least in part, for instance, based on the values predefined in the template for parameters pertaining to criteria for which data packets belong to an added flow. For example, the device 14 may perform the planning based on values predefined in the template for masking parameter(s) that indicate whether such criteria rely on the masking of packet addresses. If no masking is used, for instance, the device 14 may plan on mapping flows based on the template to a CAM rather than a TCAM. Regardless, performing hardware resource planning based on the template in this way enables the device 14 to reserve only the minimal set of hardware resources needed for adding the types of flows that the template embodies. Such planning also improves the efficiency and speed of the device 14 as the planning is performed once upon template installation, rather than redundantly each time a flow is added based on the template.

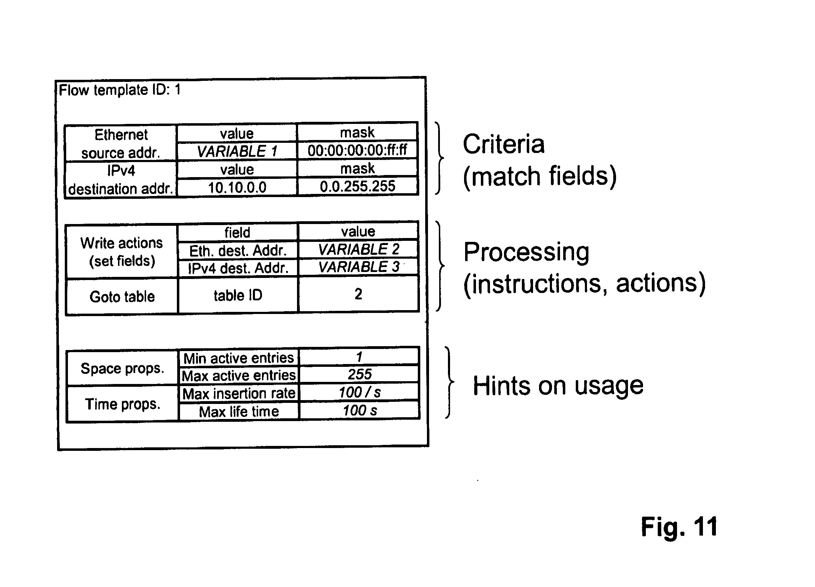

In at least some embodiments, the device performs hardware resource planning additionally or alternatively based on other information included in a template. Specifically, in these embodiments the device 14 performs hardware resource planning based on information in a template that describes the extent to which flows are expected to be added from the template; for example, in terms of how often and how many flows are expected to be added using the template. Fig. 11, for instance, shows an example where the controller 12 creates an add flow template to specify such estimated usage statistics in terms of a minimum and maximum number of flows expected to be added and a maximum insertion rate and a maximum lifetime (see parameter values provided as "hints on usage" in Fig. 11).

Regardless of the particular way in which a template describes these estimated usage statistics, the device 14 performs hardware resource planning based on those statistics in order to optimize mapping of the template to its hardware resources. As one example, flows described by a template may be served using a TCAM, or by the processor using SRAM. If the device 14 has 128 TCAM free entries, and the template indicates that at most 16 flows are expected to be added based on the template, the device 14 can utilize the TCAM. However, if the template instead indicates that at most 1024 flows are expected to be added based on the template, the device 14 will use the SRAM-based solution. Without this information, the device 14 might have started off using the TCAM, but would have had to migrate those flows into the SRAM during operation once the 128 TCAM entries were diminished.

Regardless of the particular basis for advanced hardware planning, in at least some embodiments, the device 14 exploits this planning to also improve the accuracy with which the device 14 provides hardware resource reports to the controller 12. In this case, rather than just generally reporting how many flows can be added to the device 14, the device 14 more specifically reports, for each installed template, how many flows can be added based on that template.

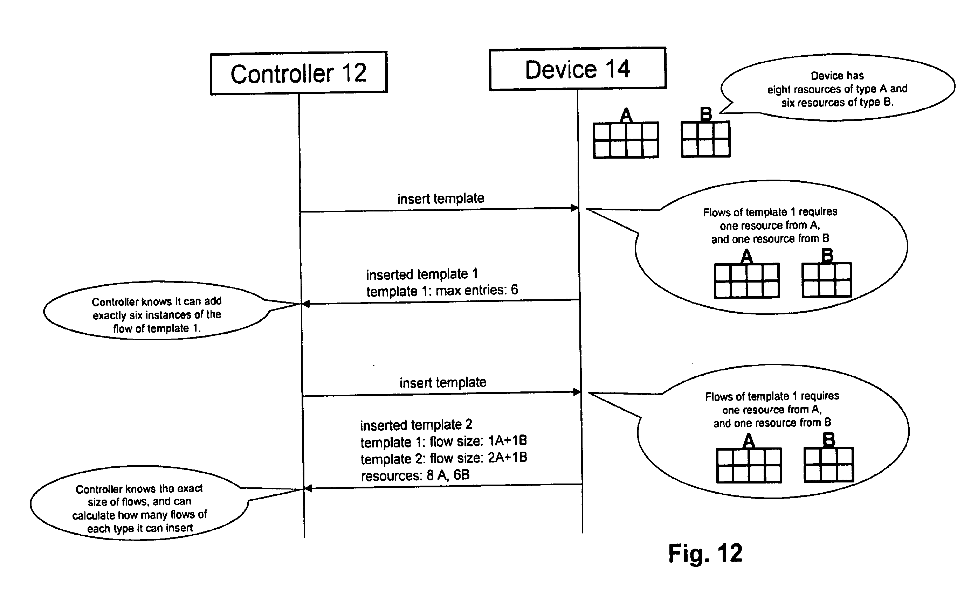

Such report may directly include a numerical flow count for each template, or may more generally describe the actual relationship between hardware resource utilization (i.e., resource utilization cost) and flows for each template. This latter case proves particularly useful when multiple templates are installed on a network device 14, since the controller 12 can deduce exactly how many flows can be added from each template. Fig. 12 illustrates a signaling example of these embodiments, wherein this relationship may be described in terms of an Integer Linear Programming (ILP) problem.

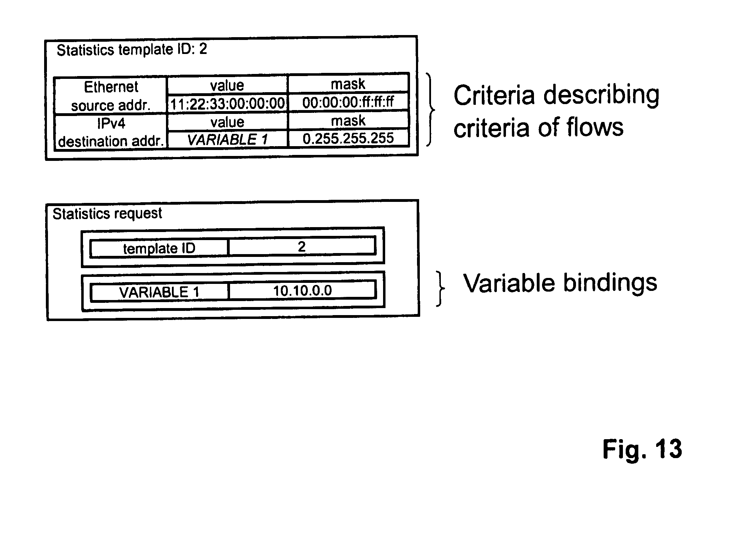

Of course, while the above embodiments have primarily related to a particular type of state management message, those skilled in the art will appreciate that the embodiments may also be extended to other kinds of state management messages. Further, the embodiments may be extended to state inspection messages that query a device for statistics regarding past processing of data packets. In this case, the controller 12 creates and sends to a network device 14 a set of one or more templates for a type of message that queries the device 12 for statistics concerning one or more particular flows (e.g., a statistics request message). Then, in order to actually request such statistics, the controller 12 may generate a statistics request message that refers to one of the templates created for statistics request messages and that specifies values for any parameters whose value has not already been predefined by that template. Fig. 13 provides a simple example in this regard.

As shown in in the upper half of Fig. 13 a template created for a statistics request message predefines (fixed) values for at least some of the parameters (e.g., fields) conveyed by a statistics request message, but refrains from predefining values for other parameters (e.g., some fields are left empty or otherwise variable). The controller 12 may therefore later generate a statistics request message (see lower half of Fig. 13) that refers to such a template (e.g., by specifying an identifier of that template - here, the identifier = 2) and that specifies values for any parameters whose value has not already been predefined by that template (here, the add flow message binds values to variable 1 defined in the template).

The receipt of such a template for a statistics request message effectively provides a network device 14 with advanced notice of parameter values common to multiple statistics request messages that will or are likely to be received from the controller 12. Thus, when installing a template, the device 14 may perform processing that exploits this advanced notice in order to install indices, or pre-gather with respect to corresponding counters. In this way, the statistics requested by a future statistics request message will already be available at the device 14 when such a message is eventually received (as such, 'on-the-fly' aggregation of counters is minimized). A template thus gives the device 14 advance notice regarding what kind of statistics request to expect, and the device 14 correspondingly creates counters for those expected requests. As these counters are kept up to date along with the flow counters, the device 14 can return the actual value of the new counter immediately upon receiving a request.

As described above, one or more embodiments herein introduce so-called templates to the communication protocol used between the controller 12 and network devices 14 in an SDN 10. For purposes of illustration rather than limitation, the description below provides specific examples of such templates in the context of an OpenFlow embodiment.

In this regard, flow templates may bear the same format as original (OpenFlow or other) flow descriptions, but are further annotated in order to appoint fields as being either "template variables" or constant values. The template variables will be filled in by the actual flow insertion.

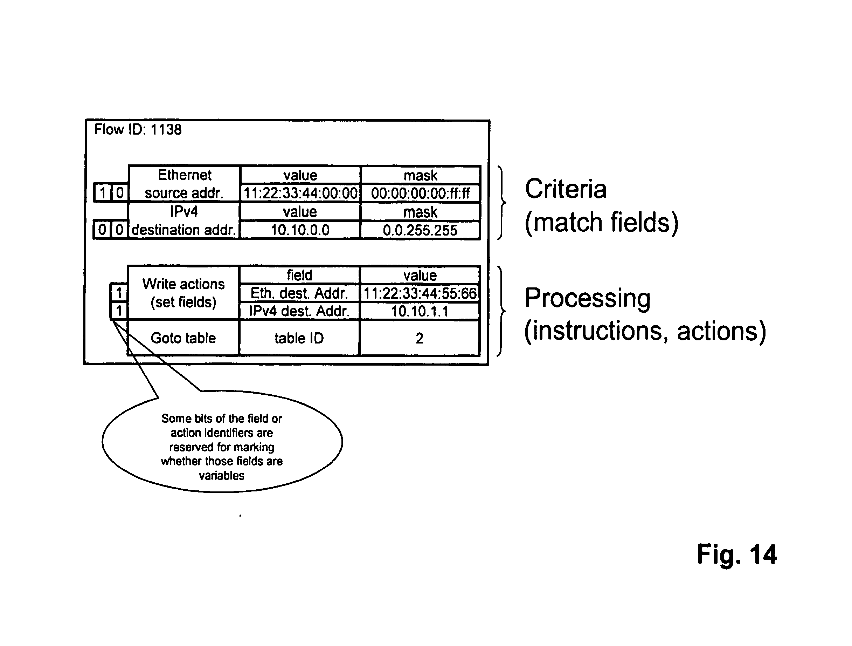

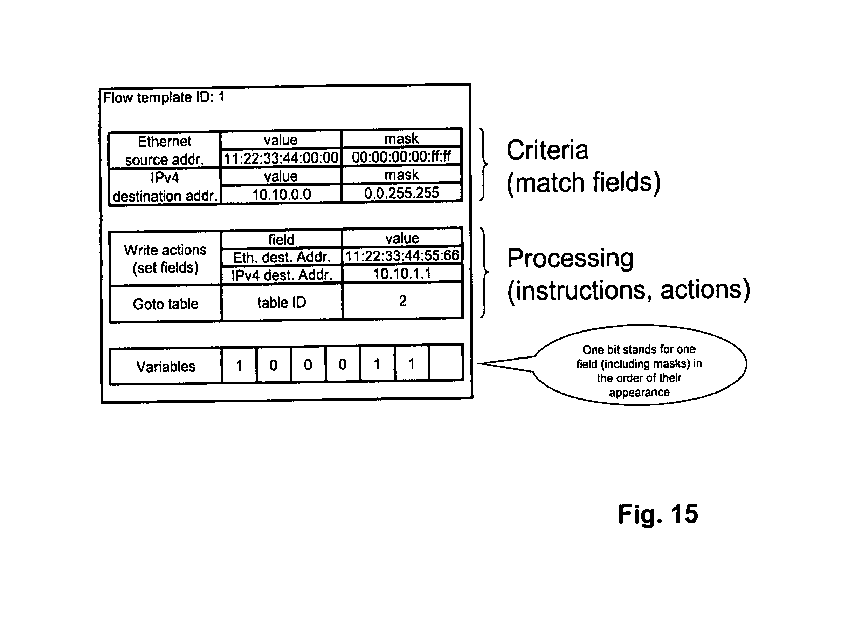

Such an approach can be implemented in a number of ways. For example bits of class/type information of the fields can be reserved for the annotation, where bits are set/unset if the given field and/or mask field is a constant or not (see, for instance, Fig. 14). Alternatively, the original description can be extended with a subsequent bit field, where each bit corresponds to a field in a similar manner. Fig. 15 illustrates an example of this embodiment.

Regardless, to maintain backward compatibility, the existing flow insertion message can be reused to insert/remove templates. The device 14 can distinguish between a flow (or group) insertion and a template insertion by the existence of annotation bits. For example, in one embodiment, if there is no annotation (e.g., all values are fixed), a message is considered a flow entry, otherwise it is considered a template.

In at least some embodiments, the network device 14 returns a template identifier to the controller 12 if the device 14 receives a message that is a template. The device 14 may also return a field describing the amount of flows from this template it (e.g., a switch) can accept (as in Fig. 12). Or, if there are multiple templates installed, the device 14 can return an ILP-like syntax describing the costs of templates and available resources in an abstract format. However, if there is an error, the original error handling procedure can be used (after extending with new template related messages).

Flows based on templates are defined using a new format. In this format, the template identifier is specified, after which the values of the "template variables" follow in the order of appearance in the template. For example in a Type-Length-Value (TLV) format protocol for fixed length values (TV fields) only the value is present; otherwise the length and value fields are communicated (see Fig. 11). The flow entry is then analyzed for the exact values, and then inserted; or in case of an error, the original error handling is utilized.

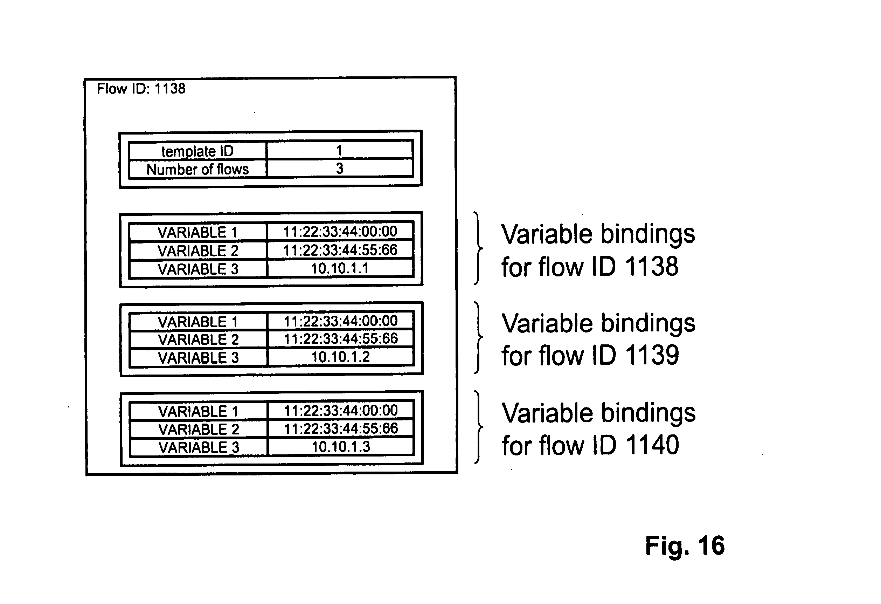

In a further embodiment shown in Fig. 16, the template identifier is followed by a flow-number field, and then the fields are listed for all flows. This allows for bulk loading of flow entries.

Statistics templates may be added to the protocol in a similar manner to that of flow (or group) templates: If the match criteria described by the statistics contains annotations for "template variable", the return value is a template identifier.

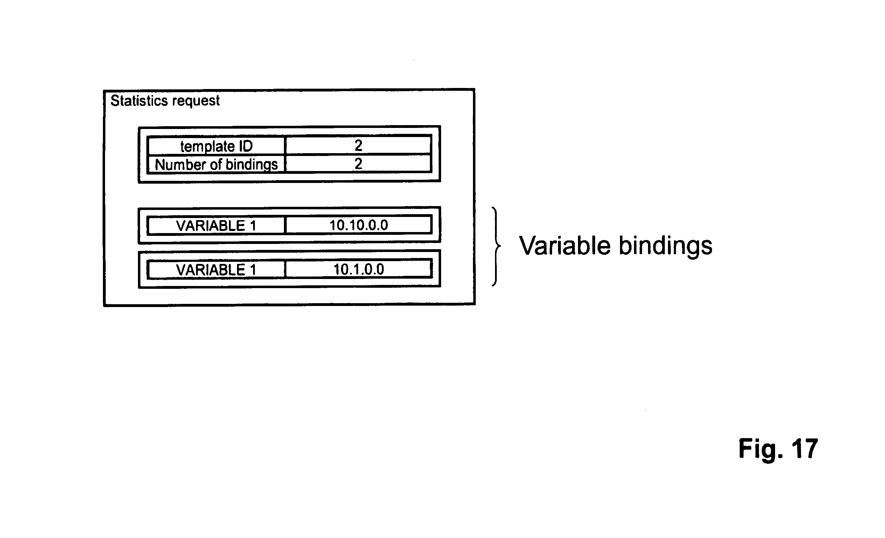

At a later time the controller can request the statistics referring to this template in a similar way to how flows can refer to templates. Optionally the bulk loading mechanism can also be reused to define a more complex OR-relation of statistics requests in one step (see, for instance, Fig. 17).

In view of the above, those skilled in the art will appreciate that one or more embodiments herein provide various advantages. These include, for instance, reduced control channel bandwidth usage, as the common information of multiple flow entries is only sent down once (in the form of the template), and only flow-specific values are sent down upon flow insertion. Some embodiments reduce load on the network device, as the template only needs to be parsed and mapped to hardware once (whereas currently the same validation and planning needs to be done per flow insertion). Some embodiments enable bulk loading of flows, further reducing bandwidth usage, and load on the network device (due to caching, etc.). Still other embodiments permit the network device to gain knowledge of the flow types to be expected before flows are actually inserted, so that the device can better align the flow structures to its hardware resource; thus providing more efficient execution both in terms of execution speed and flow capacity. Further, by using the templates, the network device can provide an accurate prediction of how many flow entries of the given kinds can fit into its hardware resources (whereas currently only a best-effort information can be given). Also, statistics templates reduce the load on the network device during statistics requests, as it can align its indexes and use pre-gathered information during the requests.

Those skilled in the art will further appreciate that various aspects of one or more embodiments herein may be generally described as using templates to describe commonalities in the flows (or rules) to be inserted into a network device by a controller process. Embodiments may also be described as using templates to enable mapping of future flows/rules to be inserted into the device already during template insertion, using templates to enable a more precise reporting of hardware resources (in terms of flows/rules) to the controller in a form of constraint-based description, and/or using templates to enable indexing or prioritizing counters or statistics features on the network device for more efficient statistics reporting. Still other embodiments may be described as using an ILP-like description for communicating inter-template constraints.

While the technique presented herein has been described with respect to particular embodiments, those skilled in the art will recognize that the present invention is not limited to the specific embodiments described and illustrated herein. It is to be understood that the present disclose is only illustrative. Accordingly, it is intended that the invention be limited only by the scope of the claims appended hereto.

## Claims

1. A method (800) implemented by a controller (12) in a software defined network (10) for programming or querying a network device (14) via a communications protocol, the method comprising:
creating (802) at least one template for a type of message defined by the communications protocol, wherein the template predefines at least one value for at least one parameter conveyed by that type of message, which is an add flow message directed at installing a new data packet flow onto the network device;
sending (804) the at least one template to the network device (14) for installation by that network device (14) to enable planning to which hardware resources of the network device (14) flows added based on the template will be mapped; and
receiving from the network device (14) a report indicative of how many flows can be added based on the template.

2. The method of claim 1, wherein the at least one template has an identifier, and wherein a message refers to the template by specifying its identifier.

3. A method (900) implemented by a network device (14) in a software defined network (10), wherein the network device (14) is configured to be remotely programmed or queried by a controller (12) via a communications protocol, the method comprising:
receiving (902) at least one template for a type of message defined by the communications protocol, wherein the template predefines at least one value for at least one parameter conveyed by that type of message, which is an add flow message directed at installing a new data packet flow onto the network device;
installing (904) the at least one template, wherein the installation includes planning to which hardware resources of the network device (14) flows added based on the template will be mapped; and
reporting to the controller (12) how many flows can be added based on the template.

4. The method of claim 3, wherein:
a) installing the at least one template includes at least one of
- storing the at least one template;
- interpreting or otherwise inspecting the at least one parameter value;
- checking the extent to which the network device (14) is capable of receiving and/or processing messages that refer to the template; and
- planning for hardware mapping based on the at least one template; and/or
b) installing the at least template comprises checking the extent to which the network device (14) is capable of at least one of:
- determining whether incoming data packets meet certain criteria specified in the at least one template; and
- performing certain processing specified in the at least one template.

5. The method of claim 3 or 4, wherein the type of message is an add flow message directed at installing a new data packet flow onto the network device (14).

6. The method of one of claims 3 to 5, wherein the type of message is a statistics request message that queries the network device (14) for statistics concerning one or more data packet flows installed onto the network device (14), and wherein installing the at least one template comprises creating one or more counters for the expected requests.

7. The method of any of the preceding claims, wherein:
a) for a given type of message multiple templates are provided, each template predefining values for a selected subset of parameters, wherein different templates predefine different values for at least one of the same selected subset of parameters and different selected subsets of parameters; and/or
b) the type of message is one of a state programming message and a state querying message with respect to a state of the network device (14); and/or
c) the at least one template bears the same format as a data packet flow description specified in the communications protocol; and/or
d) the communications protocol is one of the OpenFlow protocol and the ForCES Forwarding Element Model protocol as defined in RFC 5812.

8. The method of claim 7, feature group b), wherein the state programming message instantiates, deletes or modifies a rule to the network device (14) that governs or otherwise defines processing in a data plane with respect to received data packets that meet certain criteria.

9. The method of claim 7, feature group b), wherein the state querying message is directed at collecting statistics pertaining to the processing of data packets by the net-work device (14).

10. The method of claim 7, feature group c), wherein the at least one template in the data packet flow description format comprises description fields and an annotation in order to appoint the description fields as being either predefined values or template variables to be filled in later.

11. A computer program product comprising program code portions for performing the steps of any of the preceding claims when the computer program product is executed on one or more computing devices, preferably stored on a computer-readable recording medium.

12. A controller (12) for a software defined network (10), the controller (12) being configured to program or query a network device (14) via a communications protocol and comprising:
a template creator (26) configured to create at least one template for a type of message defined by the communications protocol, wherein the tem-plate predefines at least one value for at least one parameter conveyed by that type of message, which is an add flow message directed at installing a new data packet flow onto the network device; and
an interface (20) configured to send the at least one template to the network device (14) for installation by that network device (14) to enable planning to which hardware resources of the network device (14) flows added based on the template will be mapped, and to receive from the network de-vice (14) a report indicative of how many flows can be added based on the template.

13. The controller (12) of claim 12, further comprising:
a message generator (28) configured to generate a message of the type for which the at least one template is installed at the network device (14), wherein the message refers to the template and specifies a value for at least one parameter whose value has not already been specified by that template; and
an interface (20) configured to send the generated message to the network device (14).

14. A network device (14) of a software defined network (10), wherein the network device (14) is configured to be remotely programmed or queried by a controller (12) via a communications protocol, the network device comprising:
an interface (30) configured to receive at least one template for a type of message defined by the communications protocol, wherein the template predefines at least one value for at least one parameter conveyed by that type of message, which is an add flow message directed at installing a new data packet flow onto the network device; and
a template installer (36) configured to install the at least one template, wherein the installation includes planning to which hardware resources of the network device (14) flows added based on the template will be mapped;
wherein the interface (30) is further configured to report to the controller (12) how many flows can be added based on the template.

15. The network device (14) of claim 14, further comprising:
an interface (30) configured to receive a message of the type for which the at least one template is installed at the network device (14), wherein the message refers to the template and specifies a value for at least one parameter whose value has not already been specified by that template; and
a message processor (38) configured to process the message in accordance with at least one parameter value specified in the received message itself and at least one parameter value predefined in the template to which the message refers.

## Patentansprüche

1. Verfahren (800), das durch eine Steuereinrichtung (12) in einem softwaredefinierten Netzwerk (10) zur Programmierung oder Abfrage einer Netzwerkvorrichtung (14) über ein Kommunikationsprotokoll implementiert ist, wobei das Verfahren umfasst:
Erstellen (802) von zumindest einer Schablone für einen Typ von Nachricht, der durch das Kommunikationsprotokoll definiert ist, wobei die Schablone zumindest einen Wert für zumindest einen Parameter vordefiniert, der durch jenen Typ von Nachricht mitgeführt wird, die eine Nachricht zum Hinzufügen eines Stroms ist, die auf die Installation eines neuen Datenpaketstroms auf der Netzwerkvorrichtung gerichtet ist;
Senden (804) der zumindest einen Schablone zu der Netzwerkvorrichtung (14) zur Installation durch jene Netzwerkvorrichtung (14), um eine Planung zu ermöglichen, auf welche Hardwareressourcen der Netzwerkvorrichtung (14) auf der Grundlage der Schablone hinzugefügte Ströme abgebildet werden; und
Empfangen, aus der Netzwerkvorrichtung (14), eines Berichts, der angibt, wie viele Ströme auf der Grundlage der Schablone hinzugefügt werden können.

2. Verfahren gemäß Anspruch 1, wobei die zumindest eine Schablone eine Kennung aufweist, und wobei eine Nachricht sich auf die Schablone referenziert, indem deren Kennung spezifiziert wird.

3. Verfahren (900), das durch eine Netzwerkvorrichtung (14) in einem softwaredefinierten Netzwerk (10) implementiert ist, wobei die Netzwerkvorrichtung (14) konfiguriert ist, um durch eine Steuervorrichtung (12) über ein Kommunikationsprotokoll fernprogrammiert oder abgefragt zu werden, wobei das Verfahren umfasst:
Empfangen (902) von zumindest einer Schablone für einen Typ von Nachricht, der durch das Kommunikationsprotokoll definiert ist, wobei die Schablone zumindest einen Wert für zumindest einen Parameter vordefiniert, der durch jenen Typ von Nachricht mitgeführt wird, die eine Nachricht zum Hinzufügen eines Stroms ist, die auf die Installation eines neuen Datenpaketstroms auf der Netzwerkvorrichtung gerichtet ist;
Installieren (904) der zumindest einen Schablone, wobei die Installation eine Planung umfasst, auf welche Hardwareressourcen der Netzwerkvorrichtung (14) auf der Grundlage der Schablone hinzugefügte Ströme abgebildet werden werden; und
Melden, zu der Steuereinrichtung (12), wie viele Ströme auf der Grundlage der Schablone hinzugefügt werden können.

4. Verfahren gemäß Anspruch 3, wobei:
a) das Installieren der zumindest einen Schablone zumindest eines der Folgenden umfasst
- Speichern der zumindest einen Schablone;
- Interpretieren oder anderweitiges Inspizieren des zumindest einen Parameterwerts;
- Prüfen des Ausmaßes, zu dem die Netzwerkvorrichtung (14) fähig ist, Nachrichten zu empfangen und/oder zu verarbeiten, die sich auf die Schablone referenzieren; und
- Planen einer Hardwareabbildung auf der Grundlage der zumindest einen Schablone; und/oder
b) das Installieren der zumindest einen Schablone ein Prüfen des Ausmaßes umfasst, zu dem die Netzwerkvorrichtung (14) zu zumindest einem der Folgenden in der Lage ist:
- Bestimmen, ob ankommende Datenpakete bestimmte Kriterien erfüllen, die in der zumindest einen Schablone spezifiziert sind; und
- Durchführen einer bestimmten Verarbeitung, die in der zumindest einen Schablone spezifiziert ist.

5. Verfahren gemäß Anspruch 3 oder 4, wobei der Typ der Nachricht eine Nachricht zum Hinzufügen eines Stroms ist, die auf die Installation eines neuen Datenpaketstroms auf die Netzwerkvorrichtung (14) gerichtet ist.

6. Verfahren gemäß einem der Ansprüche 3 bis 5, wobei der Typ der Nachricht eine Statistikanforderungsnachricht ist, die die Netzwerkvorrichtung (14) nach Statistiken betreffend einen oder mehrere Datenpaketströme abfragt, die auf der Netzwerkvorrichtung (14) installiert sind, und wobei das Installieren der zumindest einen Schablone ein Erstellen von einem oder mehreren Zählern für die erwarteten Anforderungen umfasst.

7. Verfahren gemäß einem der vorangegangenen Ansprüche, wobei:
a) für einen gegebenen Typ von Nachricht mehrere Schablonen bereitgestellt werden, wobei jede Schablone Werte für eine ausgewählte Untermenge von Parametern vordefiniert, wobei verschiedene Schablonen verschiedene Werte für zumindest eine derselben ausgewählten Untermenge von Parametern und unterschiedliche ausgewählte Untermengen von Parametern vordefinieren; und/oder
b) der Typ von Nachricht eine aus einer Zustandsprogrammierungsnachricht und einer Zustandsabfragenachricht hinsichtlich eines Zustands der Netzwerkvorrichtung (14) ist; und/oder
c) die zumindest eine Schablone das gleiche Format wie eine Datenpaketstrombeschreibung trägt dem Kommunikationsprotokoll spezifiziert ist; und/oder
d) das Kommunikationsprotokoll eines aus einem OpenFlow-Protokoll und dem ForCES Forwarding Element Model-Protokoll gemäß Definition in RFC5812 ist.

8. Verfahren gemäß Anspruch 7, Merkmalsgruppe b), wobei die Zustandsprogrammierungsnachricht eine Regel für die Netzwerkvorrichtung (14) instanziiert, löscht oder modifiziert, die eine Verarbeitung in einer Datenebene hinsichtlich empfangener Datenpakete, die bestimmte Kriterien erfüllen, anweist oder anderweitig definiert.

9. Verfahren gemäß Anspruch 7, Merkmalsgruppe b), wobei die Zustandsabfragenachricht auf das Sammeln einer Statistik gerichtet ist, die mit der Verarbeitung von Datenpaketen durch die Netzwerkvorrichtung (14) zusammenhängt.

10. Verfahren gemäß Anspruch 7, Merkmalsgruppe c), wobei die zumindest eine Schablone in dem Datenpaketstrombeschreibungsformat Beschreibungsfelder und eine Anmerkung umfasst, um die Beschreibungsfelder entweder als vordefinierte Werte oder später auszufüllende Schablonenvariablen auszuweisen.

11. Computerprogrammprodukt, das Programmcodeabschnitte zur Durchführung der Schritte gemäß einem der vorangegangenen Ansprüche umfasst, wenn das Computerprogrammprodukt auf einer oder mehreren Computervorrichtungen ausgeführt wird, und das vorzugsweise auf einem computerlesbaren Aufzeichnungsmedium gespeichert ist.

12. Steuervorrichtung (12) für ein softwaredefiniertes Netzwerk (10), wobei die Steuervorrichtung (12) konfiguriert ist, um eine Netzwerkvorrichtung (14) über ein Kommunikationsprotokoll zu programmieren oder abzufragen, und die umfasst:
eine Schablonenerstellungseinrichtung (26), die konfiguriert ist, um zumindest eine Schablone für einen Typ von Nachricht zu erstellen, der durch das Kommunikationsprotokoll definiert ist, wobei die Schablone zumindest einen Wert für zumindest einen Parameter vordefiniert, der durch jenen Typ von Nachricht mitgeführt wird, die eine Nachricht zum Hinzufügen eines Stroms ist, die auf die Installation eines neuen Datenpaketstroms auf der Netzwerkvorrichtung gerichtet ist; und
eine Schnittstelle (20), die konfiguriert ist, um die zumindest eine Schablone zu der Netzwerkvorrichtung (14) zur Installation durch jene Netzwerkvorrichtung (14) zu senden, um eine Planung zu ermöglichen, auf welche Hardwareressourcen der Netzwerkvorrichtung (14) auf der Grundlage der Schablonen hinzugefügte Ströme abgebildet werden, und um von der Netzwerkvorrichtung (14) einen Bericht zu empfangen, der angibt, wie viele Flüsse auf der Grundlage der Schablone hinzugefügt werden können.

13. Steuervorrichtung (12) gemäß Anspruch 12, weiterhin umfassend:
eine Nachrichtenerzeugungseinrichtung (28), die konfiguriert ist, um eine Nachricht des Typs zu erzeugen, für den die zumindest eine Schablone auf der Netzwerkvorrichtung (14) installiert ist, wobei sich die Nachricht auf die Schablone referenziert und einen Wert für zumindest einen Parameter spezifiziert, dessen Wert noch nicht bereits durch jene Schablone spezifiziert wurde; und
eine Schnittstelle (20), die konfiguriert ist, um die erzeugte Nachricht zu der Netzwerkvorrichtung (14) zu senden.

14. Netzwerkvorrichtung (14) eines softwaredefinierten Netzwerks (10), wobei die Netzwerkvorrichtung (14) konfiguriert ist, um durch eine Steuervorrichtung (12) über ein Kommunikationsprotokoll fernprogrammiert oder abgefragt zu werden, wobei die Netzwerkvorrichtung umfasst:
eine Schnittstelle (30), die konfiguriert ist, um zumindest eine Schablone für einen Typ von Nachricht zu empfangen, der durch das Kommunikationsprotokoll definiert ist, wobei die Schablone zumindest einen Wert für zumindest einen Parameter vordefiniert, der durch jenen Typ von Nachricht mitgeführt wird, die eine Nachricht zum Hinzufügen eines Stroms ist, die auf die Installation eines neuen Datenpaketstroms auf der Netzwerkvorrichtung gerichtet ist; und
eine Schabloneninstallationseinrichtung (36), die konfiguriert ist, um die zumindest eine Schablone zu installieren, wobei die Installation eine Planung umfasst, auf welche Hardwareressourcen der Netzwerkvorrichtung (14) auf der Grundlage der Schablonen hinzugefügte Ströme abgebildet werden;
wobei die Schnittstelle (30) weiterhin konfiguriert ist, um zu der Steuervorrichtung (12) zu melden, wie viele Ströme auf der Grundlage der Schablone hinzugefügt werden können.

15. Netzwerkvorrichtung (14) gemäß Anspruch 14, weiterhin umfassend:
eine Schnittstelle (30), die konfiguriert ist, um eine Nachricht des Typs zu empfangen, für den die zumindest eine Schablone auf der Netzwerkvorrichtung (14) installiert ist, wobei sich die Nachricht auf die Schablone referenziert und einen Wert für zumindest einen Parameter spezifiziert, dessen Wert nicht bereits durch jene Schablone spezifiziert wurde; und
einen Nachrichtenprozessor (38), der konfiguriert ist, um die Nachricht gemäß zumindest einem Parameterwert zu verarbeiten, der in der empfangenen Nachricht selbst spezifiziert ist, und zumindest einem Parameterwert, der in der Schablone vordefiniert ist, auf die sich die Nachricht referenziert.

## Revendications

1. Procédé (800) mis en oeuvre par un contrôleur (12) dans un réseau logiciel (10) pour programmer ou interroger un dispositif (14) de réseau par l'intermédiaire d'un protocole de communications, le procédé comprenant :
la création (802) d'au moins un modèle pour un type de message défini par le protocole de communications, dans lequel le modèle prédéfinit au moins une valeur pour au moins un paramètre acheminé par ce type de message, qui est un message d'ajout de flux visant à l'installation d'un nouveau flux de paquets de données sur le dispositif de réseau ;
l'envoi (804) de l'au moins un modèle au dispositif (14) de réseau pour installation par ce dispositif (14) de réseau pour permettre de planifier sur quelles ressources matérielles du dispositif (14) de réseau des flux ajoutés sur la base du modèle seront mappés ; et
la réception du dispositif (14) de réseau d'un rapport indicateur de combien de flux peuvent être ajoutés sur la base du modèle.

2. Procédé selon la revendication 1, dans lequel l'au moins un modèle a un identifiant, et dans lequel un message fait référence au modèle en spécifiant son identifiant.

3. Procédé (900) mis en oeuvre par un dispositif (14) de réseau dans un réseau logiciel (10), dans lequel le dispositif (14) de réseau est configuré pour être programmé ou interrogé à distance par un contrôleur (12) par l'intermédiaire d'un protocole de communications, le procédé comprenant :
la réception (902) d'au moins un modèle pour un type de message défini par le protocole de communications, dans lequel le modèle prédéfinit au moins une valeur pour au moins un paramètre acheminé par ce type de message, qui est un message d'ajout de flux visant à l'installation d'un nouveau flux de paquets de données sur le dispositif de réseau ;
l'installation (904) de l'au moins un modèle, dans lequel l'installation inclut la planification sur quelles ressources matérielles du dispositif (14) de réseau des flux ajoutés sur la base du modèle seront mappés ; et
le rapport au contrôleur (12) de combien de flux peuvent être ajoutés sur la base du modèle.

4. Procédé selon la revendication 3, dans lequel :
a) l'installation de l'au moins un modèle inclut au moins un parmi
- le stockage de l'au moins un modèle ;
- l'interprétation ou de toute autre façon l'inspection de l'au moins une valeur de paramètre ;
- le contrôle de la mesure dans laquelle le dispositif (14) de réseau est apte à recevoir et/ou traiter des messages qui font référence au modèle ; et
- la planification du mappage matériel sur la base de l'au moins un modèle ; et/ou
b) l'installation de l'au moins un modèle comprend le contrôle de la mesure dans laquelle le dispositif (14) de réseau est apte à au moins une parmi :
- la détermination si des paquets de données entrants répondent à certains critères spécifiés dans l'au moins un modèle ; et
- l'exécution d'un certain traitement spécifié dans l'au moins un modèle.

5. Procédé selon la revendication 3 ou 4, dans lequel le type de message est un message d'ajout de flux visant à l'installation d'un nouveau flux de paquets de données sur le dispositif (14) de réseau.

6. Procédé selon l'une des revendications 3 à 5, dans lequel le type de message est un message de demande de statistiques qui interroge le dispositif (14) de réseau pour des statistiques concernant un ou plusieurs flux de paquets de données installés sur le dispositif (14) de réseau, et dans lequel l'installation de l'au moins un modèle comprend la création d'un ou plusieurs compteurs pour les demandes attendues.

7. Procédé selon l'une quelconque des revendications précédentes, dans lequel :
a) pour un type donné de messages, des modèles multiples sont fournis, chaque modèle prédéfinissant des valeurs pour un sous-ensemble sélectionné de paramètres, dans lequel différents modèles prédéfinissent différentes valeurs pour au moins un du même sous-ensemble sélectionné de paramètres et de différents sous-ensembles sélectionnés de paramètres ; et/ou
b) le type de message est un d'un message de programmation d'état et d'un message d'interrogation d'état par rapport à un état du dispositif (14) de réseau ; et/ou
c) l'au moins un modèle porte le même format qu'une description de flux de paquets de données spécifiée dans le protocole de communications ; et/ou
d) le protocole de communications est un du protocole OpenFlow et du protocole de modèle d'élément de transmission ForCES tel que défini dans la RFC 5812.

8. Procédé selon la revendication 7, groupe de caractéristiques b), dans lequel le message de programmation d'état instancie, supprime ou modifie une règle pour le dispositif (14) de réseau qui régit ou de toute autre façon définit un traitement dans un plan de données par rapport à des paquets de données reçus qui répondent à certains critères.

9. Procédé selon la revendication 7, groupe de caractéristiques b), dans lequel le message d'interrogation d'état vise à collecter des statistiques se rapportant au traitement de paquets de données par le dispositif (14) de réseau.

10. Procédé selon la revendication 7, groupe de caractéristiques c), dans lequel l'au moins un modèle dans le format de description de flux de paquets de données comprend des champs de description et une annotation afin de marquer les champs de description comme étant soit des valeurs prédéfinies, soit des variables de modèle à remplir plus tard.

11. Produit de programme informatique comprenant des parties de code de programme pour mettre en oeuvre les étapes de l'une quelconque des revendications précédentes lorsque le produit de programme informatique est exécuté sur un ou plusieurs dispositifs informatiques, préférablement stocké sur un support d'enregistrement lisible par un ordinateur.

12. Contrôleur (12) pour un réseau logiciel (10), le contrôleur (12) étant configuré pour programmer ou interroger un dispositif (14) de réseau par l'intermédiaire d'un protocole de communications et comprenant :
un créateur (26) de modèles configuré pour créer au moins un modèle pour un type de message défini par le protocole de communications, dans lequel le modèle prédéfinit au moins une valeur pour au moins un paramètre acheminé par ce type de message, qui est un message d'ajout de flux visant à l'installation d'un nouveau flux de paquets de données sur le dispositif de réseau ; et
une interface (20) configurée pour envoyer l'au moins un modèle au dispositif (14) de réseau pour installation par ce dispositif (14) de réseau pour permettre de planifier sur quelles ressources matérielles du dispositif (14) de réseau des flux ajoutés sur la base du modèle seront mappés, et pour recevoir du dispositif (14) de réseau un rapport indicateur de combien de flux peuvent être ajoutés sur la base du modèle.

13. Contrôleur (12) selon la revendication 12, comprenant en outre :
un générateur (28) de message pour générer un message du type pour lequel l'au moins un modèle est installé au niveau du dispositif (14) de réseau, dans lequel le message fait référence au modèle et spécifie une valeur pour au moins un paramètre dont la valeur n'a pas encore été spécifiée par ce modèle ; et
une interface (20) configurée pour envoyer le message généré au dispositif (14) de réseau.

14. Dispositif (14) de réseau d'un réseau logiciel (10), dans lequel le dispositif (14) de réseau est configuré pour être programmé ou interrogé à distance par un contrôleur (12) par l'intermédiaire d'un protocole de communications, le dispositif de réseau comprenant :
une interface (30) configurée pour recevoir au moins un modèle pour un type de message défini par le protocole de communications, dans lequel le modèle prédéfinit au moins une valeur pour au moins un paramètre acheminé par ce type de message, qui est un message d'ajout de flux visant à l'installation d'un nouveau flux de paquets de données sur le dispositif de réseau ; et
un installateur (36) de modèle configuré pour installer l'au moins un modèle, dans lequel l'installation inclut la planification sur quelles ressources matérielles du dispositif (14) de réseau des flux ajoutés sur la base du modèle seront mappés ;
dans lequel l'interface (30) est en outre configurée pour rapporter au contrôleur (12) combien de flux peuvent être ajoutés sur la base du modèle.

15. Dispositif (14) de réseau selon la revendication 14, comprenant en outre :
une interface (30) configurée pour recevoir un message du type pour lequel l'au moins un modèle est installé au niveau du dispositif (14) de réseau, dans lequel le message fait référence au modèle et spécifie une valeur pour au moins un paramètre dont la valeur n'a pas encore été spécifiée par ce modèle ; et
un processeur (38) de message configuré pour traiter le message en fonction d'au moins une valeur de paramètre spécifiée dans le message reçu lui-même et d'au moins une valeur de paramètre prédéfinie dans le modèle auquel le message fait référence.
